# EUROPEAN PATENT APPLICATION

(11) **EP 2 738 924 A2**
(43) Date of publication of application: **04.06.2014**
(21) Application number: 13194198.1
(22) Date of filing: 25.11.2013
(51) Int. Cl.: H02K 21/16

(54) **Two-phase motor and hydraulic power steering system using the two-phase motor**

(30) Priority: 03.12.2012 JP 2012264327
(71) Applicant: JTEKT CORPORATION, Osaka-shi Osaka 542-8502 (JP)
(72) Inventor: Sakamaki, Masahiko, Osaka-shi, Osaka 542-8502 (JP)
(74) Representative: Winter, Brandl, Fürniss, Hübner, Röss, Kaiser, Polte - Partnerschaft

(57) **Abstract**

A two-phase motor with high space utilization efficiency is provided for driving a hydraulic control valve. A valve drive motor (15) includes a rotor (70) and a stator (80) surrounding the rotor (70). The rotor (70) has six magnetic poles. The stator (80) includes six stator windings (83U1, 83V1, 83U2, 83V2, 83U3, 83V3). The stator winding (83U1) and the stator winding (83V1) constitute a pair of two-phase stator windings. The stator winding (83U2) and the stator winding (83V2) constitute a pair of two-phase stator windings. The stator winding (83U3) and the stator winding (83V3) constitute a pair of two-phase stator windings. The two stator windings of each pair are disposed at an angular interval of 180 degrees in terms of an electrical angle.

## Description

### BACKGROUND OF THE INVENTION

### 1. Field of the Invention

The invention relates to a two-phase motor and a hydraulic power steering system using the two-phase motor.

### 2. Description of Related Art

There has conventionally been known a hydraulic power steering system in which a steering force is assisted by supplying a hydraulic fluid from a hydraulic pump to a power cylinder connected to a vehicle steering mechanism, through a hydraulic control valve. In a typical hydraulic power steering system, a hydraulic control valve is mechanically connected to a steering member, such as a steering wheel, through a steering shaft. The opening of the hydraulic control valve is adjusted according to a steering angle of the steering member.

As described in Japanese Patent Application Publication No. 2006-306239 (JP 2006-306239 A), there has been developed a hydraulic power steering system, in which the opening of a hydraulic control valve is controlled by an electric motor for driving the valve without mechanically connecting the hydraulic control valve to a steering member. Such a hydraulic power steering system is referred to as a high-performance electric pump hydraulic power steering system, which is abbreviated to a high-performance H-EPS.

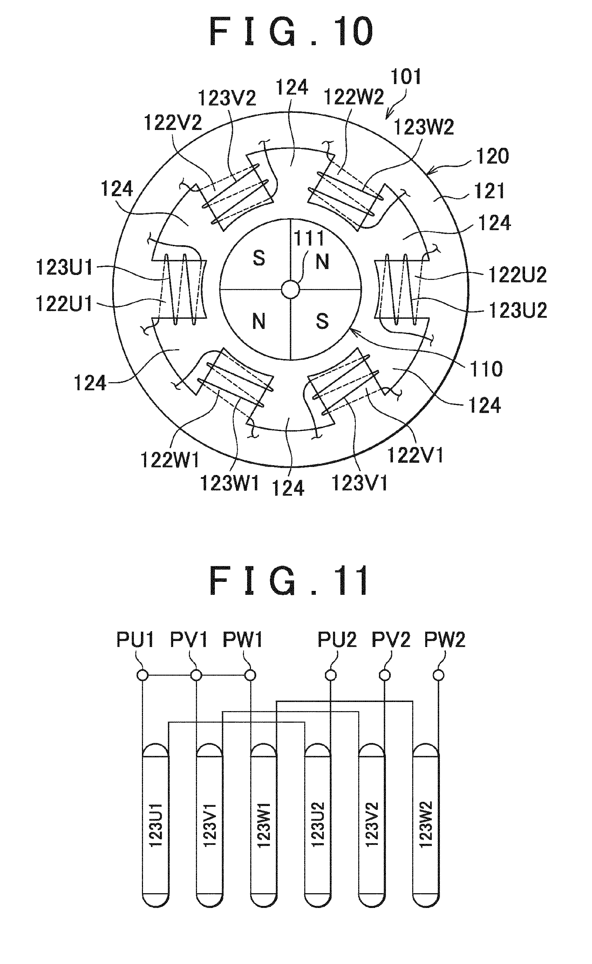

The present applicant has developed a high-performance H-EPS using a three-phase brushless motor as a valve drive motor. The following will describe a method for driving the three-phase brushless motor in the high-performance H-EPS developed by the present applicant with reference to FIG. 10 to FIG. 12.

FIG. 10 is a schematic diagram of a three-phase brushless motor 101, which has four poles and six slots. The three-phase brushless motor 101 includes a rotor 110 and a stator 120 surrounding the rotor 110. The rotor 110 is supported so as to be rotatable around a rotary shaft 111. The rotor 110 has four magnetic poles, i.e., two pairs of magnetic poles.

The stator 120 includes a stator retaining ring 121, six stator teeth 122U1, 122W1, 122V1, 122U2, 122W2, 122V2 that project inward from the stator retaining ring 121, and stator windings 123U1, 123W1, 123V1, 123U2, 123W2, 123V2 that are wound around the stator teeth, namely, 122U1, 122W1, 122V1, 122U2, 122W2, 122V2, respectively.

The stator windings 123U1, 123U2 are U-phase stator windings. The first U-phase stator winding 123U1 may be referred to as the U-phase first stator winding, and the second U-phase stator winding 123U2 may be referred to as the U-phase second stator winding. The stator windings 123V1, 123V2 are V-phase stator windings. The first V-phase stator winding 123V1 may be referred to as the V-phase first stator winding, and the second V-phase stator winding 123V2 may be referred to as the V-phase second stator winding. The stator windings 123W1, 123W2 are W-phase stator windings. The first W-phase stator winding 123W1 may be referred to as the W-phase first stator winding, and the second W-phase stator winding 123W2 may be referred to as the W-phase second stator winding.

The stator teeth 122U1, 122W1, 122V1, 122U2, 122W2, 122V2 are formed at equal intervals on the inner periphery of the stator retaining ring 121, and define six slots 124 thereamong. The stator windings 123U1, 123W1, 123V1, 123U2, 123W2, 123V2 are accommodated in the slots 124, respectively.

As shown in FIG. 11, one ends PU1, PV1, PW1 of the U-phase first stator winding 123U1, the V-phase first stator winding 123V1, and the W-phase first stator winding 123W1, respectively, are interconnected. The other ends of the stator windings 123U1, 123V1, 123W1 are connected to one ends of the U-phase second stator winding 123U2, the V-phase second stator winding 123V2, and the W-phase second stator winding 123W2, respectively. A three-phase inverter circuit, which is a motor drive circuit, is connected to the other ends PU2, PV2, PW2 of the U-phase second stator winding 123U2, the V-phase second stator winding 123V2, and the W-phase second stator winding 123W2.

In the high-performance H-EPS, the rotation angle range of the valve drive motor in terms of a mechanical angle is, for example, a range of approximately ±5 degrees centered on the neutral position of a hydraulic control valve. If the valve drive motor is a three-phase brushless motor having four poles and six slots, then the rotation angle range of the valve drive motor in terms of an electrical angle is a range of approximately ±10 degrees centered on the neutral position of the hydraulic control valve.

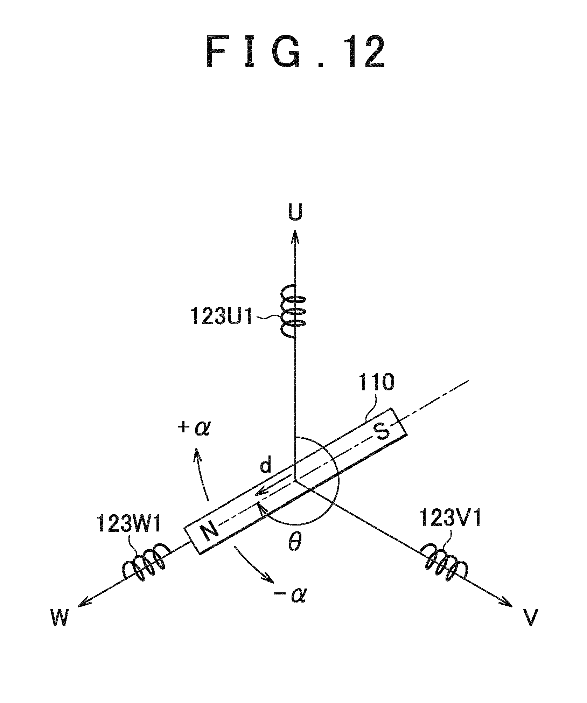

For example, FIG. 12 shows a UVW coordinate system, in which a U-axis, a V-axis, and a W-axis are taken in the directions of the U-phase first stator winding 123U1, the V-phase first stator winding 123V1, and the W-phase first stator winding 123W1, respectively. The valve drive motor and the hydraulic control valve are connected such that the neutral position of the hydraulic control valve coincides with the rotation angle position of the rotor 110 where a d-axis, which is the magnetic pole axis of the rotor 110, coincides with the W-axis. The rotation angle of the rotor 110 is a rotation angle θ formed by the magnetic pole axis of the rotor 110, namely, the d-axis, with respect to the U-axis. Therefore, the rotation angle θ at the neutral position of the hydraulic control valve is 240 degrees in terms of an electrical angle. A stopper (not shown) is provided to restrict the rotation angle range of the rotor 110 such that the rotor 110 is rotatable only within an angle range of ±10 degrees in terms of an electrical angle centered on a rotation angle position corresponding to the neutral position. If the rotatable range of the rotor 110 is denoted by 2α, then α is 10 degrees.

The rotation of the rotor 110 is controlled within the foregoing rotation angle range by controlling a drive current and a voltage applied to the U-phase first stator winding 123U1 and the V-phase first stator winding 123V1 without applying a voltage to the W-phase first stator winding 123W1. More specifically, when the drive current is supplied from the U-phase first stator winding 123U1 to the V-phase first stator winding 123V1, the rotor 110 rotates in a predetermined first direction. When the drive current is supplied from the V-phase first stator winding 123V1 to the U-phase first stator winding 123U1, the rotor 110 rotates in a second direction that is opposite to the foregoing first direction.

A UVW coordinate system, in which a U-axis, a V-axis, and a W-axis are taken in the directions of the U-phase second stator winding 123U2, the V-phase second stator winding 123V2, and the W-phase second stator winding 123W2, respectively, has the same configuration as that shown in FIG. 12. According to the motor driving method described above, the W-phase stator windings 123W1, 123W2 do not contribute to the motor driving, resulting in low space utilization efficiency.

### SUMMARY OF THE INVENTION

An object of the present invention is to provide a two-phase motor with high space utilization efficiency, and a hydraulic power steering system using the two-phase motor.

1) In order to achieve the above-described object, an aspect of the present invention relates to a two-phase motor that includes a stator including a series circuit formed of a first-phase stator winding and a second-phase stator winding; and a rotor that is opposed to the stator, and has a plurality of magnetic poles. The first-phase stator winding and the second-phase stator winding are disposed at an interval of 180 degrees in terms of an electrical angle. The two-phase motor is used in a state where a rotation angle range of the rotor is limited to below 180 degrees in terms of the electrical angle. According to this aspect of the invention, even in the case where the two-phase motor is used in the state where the rotation angle range of the rotor is limited to below 180 degrees in terms of the electrical angle, all the stator windings wound on the stator contribute to the motor drive. Therefore, it is possible to provide the two-phase motor with high space utilization efficiency.

2) According to another aspect of the present invention, in the two-phase motor described in the above section 1), the first-phase stator winding and the second-phase stator winding are connected in series such that a winding direction of the first-phase stator winding and a winding direction of the second-phase stator winding are opposite to each other when viewed from either one of terminals of the series circuit. 3) According to yet another aspect of the present invention, in the two-phase motor described in the above section 1) or 2), the rotor has 2n magnetic poles and the stator has 2n stator windings, the n denoting an arbitrary natural number.

4) Yet another aspect of the present invention relates to a hydraulic power steering system in which a steering force is assisted by supplying a hydraulic fluid from a hydraulic pump to a power cylinder connected to a vehicle steering mechanism, through a hydraulic control valve that is not mechanically connected to a steering member. The hydraulic power steering system includes a valve drive motor that is constituted by the two-phase motor described in any one of the above-described aspects, and that controls an opening of the hydraulic control valve; and a motor control unit that controls the valve drive motor. According to this aspect of the present invention, even in the case where the valve drive motor is controlled in the limited rotation angle range, all the stator windings in the valve drive motor contribute to the motor drive. Therefore, it is possible to provide the hydraulic power steering system including the valve drive motor with high space utilization efficiency.

5) According to yet another aspect of the present invention, in the hydraulic power steering system described in the above section 4), the motor control unit includes an opening command value setter that sets an opening command value that is a command value of the opening of the hydraulic control valve; and a unit that controls the valve drive motor according to the opening command value set by the opening command value setter.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram showing the schematic configuration of a hydraulic power steering system according to an embodiment of the present invention;
FIG. 2 is a schematic diagram illustrating the configuration of a valve drive motor;
FIG. 3 is a schematic diagram illustrating the connection state of stator windings in the valve drive motor shown in FIG. 2;
FIG. 4 is a schematic diagram illustrating only one pair of three pairs of two-phase stator windings and one pair of three pairs of magnetic poles included in the valve drive motor shown in FIG. 2;
FIG. 5 is a block diagram showing the electrical configuration of a valve drive motor control unit;
FIG. 6 is a graph showing an example in which an assist torque command value is set with respect to a detected steering torque;
FIG. 7 is a graph showing an example in which a valve opening command value is set with respect to the assist torque command value;
FIG. 8 is a graph showing an example in which a pump revolution number command value is set with respect to a steering angular velocity;
FIG. 9 is a schematic diagram illustrating the configuration of another example of the valve drive motor;
FIG. 10 is a schematic diagram illustrating the configuration of a three-phase brushless motor;
FIG. 11 is a schematic diagram illustrating the connection state of stator windings of the three-phase brushless motor shown in FIG. 10; and
FIG. 12 is a schematic diagram for explaining a driving method in the case where the three-phase brushless motor shown in FIG. 10 is used as a valve drive motor.

### DETAILED DESCRIPTION OF EMBODIMENTS

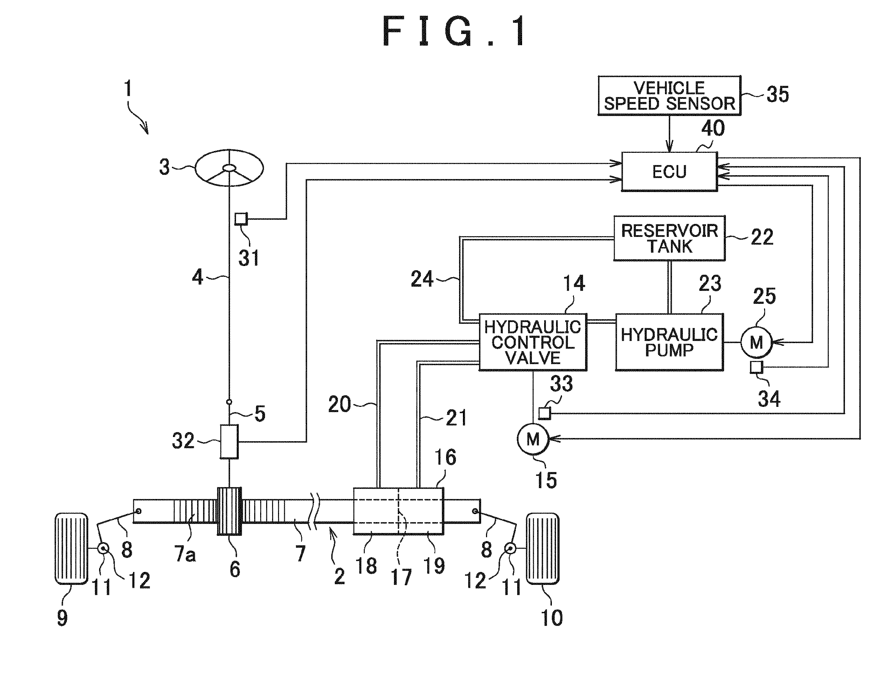

Hereinafter, embodiments of the present invention will be described in detail with reference to the accompanying drawings. FIG. 1 is a schematic diagram showing the schematic configuration of a hydraulic power steering system according to an embodiment of the present invention. A hydraulic power steering system 1 is configured to apply a steering assist force to a steering mechanism 2 of a vehicle. The steering mechanism 2 includes a steering wheel 3 serving as a steering member operated by a driver to steer a vehicle, a steering shaft 4 connected to the steering wheel 3, a pinion shaft 5 connected to the distal end of the steering shaft 4, a pinion gear 6 formed on the distal end of the pinion shaft 5, and a rack shaft 7 that includes a rack 7a meshing with the pinion gear 6 and that serves as a steered shaft extending in the lateral direction of the vehicle.

Tie rods 8 are connected to respective ends of the rack shaft 7. The tie rods 8 are connected to knuckle arms 11 that support right and left steered wheels 10 and 9, respectively. The knuckle arms 11 are provided so as to be rotatable around respective king pins 12. When the steering wheel 3 is operated, the steering shaft 4 is rotated. The rotation of the steering shaft 4 is converted to linear movement of the rack shaft 7 along the axial direction of the rack shaft 7 through the pinion gear 6 and the rack 7a. The linear movement is converted to rotary movement of the knuckle arms 11 around the respective king pins 12, and thus, the right and left steered wheels 10, 9 are steered.

A steering angle sensor 31 that detects a steering angle θh, which is the rotation angle of the steering shaft 4, is disposed around the steering shaft 4. In this embodiment, the steering angle sensor 31 detects the rotation angles in both forward and reverse directions of the steering shaft 4 relative to the neutral position of the steering shaft 4, and outputs an angle of rotation in the right direction from the neutral position as, for example, a positive value, and outputs an angle of rotation in the left direction from the neutral position as, for example, a negative value. The pinion shaft 5 is provided with a torque sensor 32 that detects a steering torque Th.

The hydraulic power steering system 1 includes a hydraulic control valve 14, a power cylinder 16, and a hydraulic pump 23. The hydraulic control valve 14 is, for example, a rotary valve, and includes a rotor housing (not shown) and a rotor (not shown) that switches the direction in which a hydraulic fluid flows. The rotor of the hydraulic control valve 14 is rotated by an electric motor 15, and thus, the opening of the hydraulic control valve 14 is controlled. The electric motor 15 will be hereinafter referred to as the valve drive motor 15. Disposed in the vicinity of the hydraulic control valve 14 is a rotation angle sensor 33 that detects a rotation angle θB of a rotor of the valve drive motor 15, i.e., the opening of the hydraulic control valve 14. In this embodiment, a rotation angle sensor using a Hall IC is used as the rotation angle sensor 33. The Hall IC is a device in which a Hall element and an IC are packaged, the IC converting output signals of the Hall element to digital signals.

The hydraulic control valve 14 is connected to the power cylinder 16 that applies a steering assist force to the steering mechanism 2. The power cylinder 16 is connected to the steering mechanism 2. More specifically, the power cylinder 16 includes a piston 17 provided integrally with the rack shaft 7 and a pair of cylinder chambers 18, 19 defined by the piston 17. The cylinder chambers 18 and 19 are connected to the hydraulic control valve 14 through corresponding oil passages 20 and 21, respectively.

The hydraulic control valve 14 is installed in an oil circulation passage 24 that extends through a reservoir tank 22 and the hydraulic pump 23 for generating a steering assist force. The hydraulic pump 23 is constituted by, for example, a gear pump. The hydraulic pump 23 is driven by an electric motor 25, pumps the hydraulic fluid from the reservoir tank 22 and supplies the hydraulic fluid to the hydraulic control valve 14. The electric motor 25 will be hereinafter referred to as the pump drive motor 25. Excess hydraulic fluid is returned from the hydraulic control valve 14 to the reservoir tank 22 through the oil circulation passage 24.

The pump drive motor 25 is driven to rotate in one direction so as to drive the hydraulic pump 23. More specifically, an output shaft of the pump drive motor 25 is connected to an input shaft of the hydraulic pump 23. When the output shaft of the pump drive motor 25 rotates, the input shaft of the hydraulic pump 23 rotates, and thus the hydraulic pump 23 is driven. The pump drive motor 25 is constituted by a three-phase brushless motor. Disposed in the vicinity of the pump drive motor 25 is a rotation angle sensor 34 that is constituted by, for example, a resolver, and that detects a rotation angle θP of a rotor of the pump drive motor 25.

In the case where the rotor of the hydraulic control valve 14 is rotated in a first direction from a reference rotation angle position, i.e., the neutral position, by the valve drive motor 15, the hydraulic fluid is supplied to a first cylinder chamber of the cylinder chambers 18, 19 of the power cylinder 16 through a first oil passage of the oil passages 20, 21. At the same time, the hydraulic fluid in a second cylinder chamber is returned to the reservoir tank 22. Further, in the case where the rotor of the hydraulic control valve 14 is rotated in a second direction from the neutral position by the valve drive motor 15, the hydraulic fluid is supplied to the second cylinder chamber of the cylinder chambers 18, 19 through a second oil passage of the oil passages 20, 21, and the hydraulic fluid in the first cylinder chamber is returned to the reservoir tank 22.

In the case where the rotor of the hydraulic control valve 14 is at the neutral position, the hydraulic control valve 14 is in, a so-called equilibrium state, and both the cylinder chambers 18, 19 of the power cylinder 16 are maintained at an equal pressure, and the hydraulic fluid circulates in the oil circulation passage 24. When the rotor of the hydraulic control valve 14 is rotated by the valve drive motor 15, the hydraulic fluid is supplied either the cylinder chamber 18 or 19 of the power cylinder 16, and the piston 17 moves along the direction of the vehicle width, i.e., the lateral direction of the vehicle. This causes the steering assist force to be applied to the rack shaft 7.

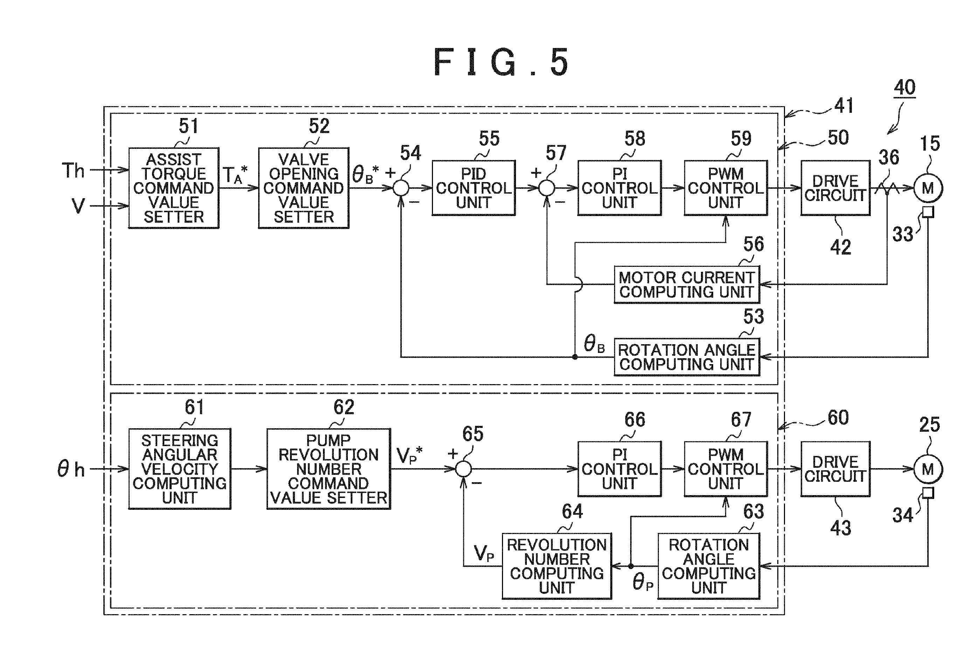

The valve drive motor 15 and the pump drive motor 25 are controlled by an electronic control unit (hereinafter referred to as the ECU) 40. The ECU 40 receives, for example, the steering angle θh detected by the steering angle sensor 31, the steering torque Th detected by the torque sensor 32, an output signal of the rotation angle sensor 33 for the valve drive motor 15, an output signal of the rotation angle sensor 34 for the pump drive motor 25, a vehicle speed V detected by a vehicle speed sensor 35, and an output signal of a current sensor 36 that detects the current flowing to the valve drive motor 15. The current sensor 36 is shown in FIG. 5.

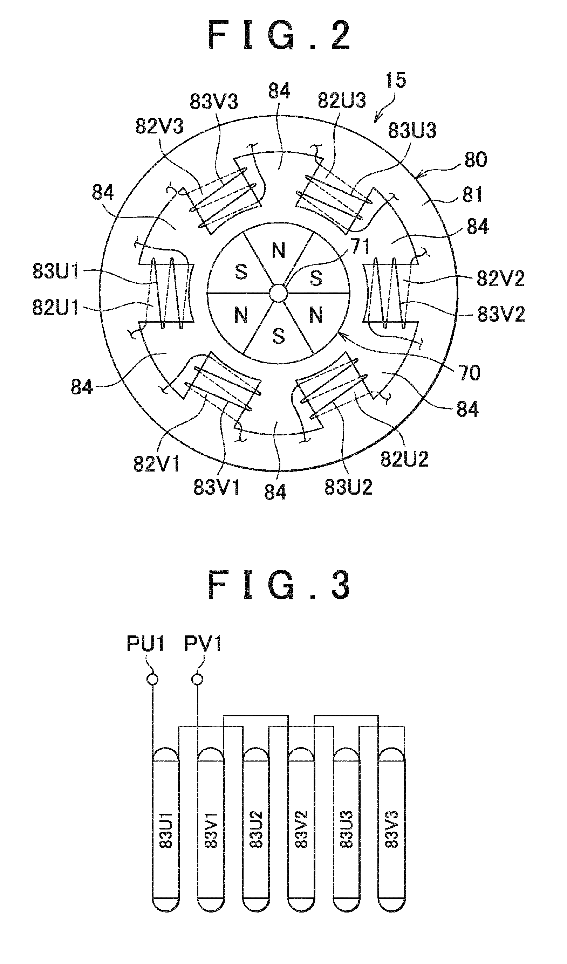

FIG. 2 is a schematic diagram illustrating the configuration of the valve drive motor 15. The valve drive motor 15 is a two-phase brushless motor having six poles and six slots newly developed for driving a valve by the present inventor. The valve drive motor 15 includes a rotor 70 and a stator 80 surrounding the rotor 70. The rotor 70 is supported so as to be rotatable around a rotary shaft 71. The rotor 70 has six magnetic poles, i.e., three pairs of magnetic poles.

The stator 80 includes a stator retaining ring 81, six stator teeth 82U1, 82V 1, 82U2, 82V2, 82U3, 82V3 that project inward from the stator retaining ring 81, and stator windings 83U1, 83V1, 83U2, 83V2, 83U3, 83V3 that are wound around the stator teeth 82U1, 82V1, 82U2, 82V2, 82U3, 82V3, respectively. The six stator teeth will be correctively referred to as the stator teeth 82. The six stator windings will be collectively referred to as the stator windings 83.

The stator windings 83U1, 83U2, and 83U3 are the stator windings of the U-phase that is a first phase. Among the three U-phase stator windings, the stator winding 83U1 may be referred to as the U-phase first stator winding, the stator winding 83U2 may be referred to as the U-phase second stator winding, and the stator winding 83U3 may be referred to as the U-phase third stator winding. The stator windings 83V1, 83V2, 83V3 are the stator windings of the V-phase that is a second phase. Among the three V-phase stator windings, the stator winding 83V1 may be referred to as the V-phase first stator winding, the stator winding 83V2 may be referred to as the V-phase second stator winding, and the stator winding 83V3 may be referred to as the V-phase third stator winding.

The U-phase first stator winding 83U1 and the V-phase first stator winding 83V1 constitute a pair of two-phase stator windings. The U-phase second stator winding 83U2 and the V-phase second stator winding 83V2 constitute a pair of two-phase stator windings. The U-phase third stator winding 83U3 and the V-phase third stator winding 83V3 constitute a pair of two-phase stator windings. The two stator windings of each pair are disposed at an angular interval of 180 degrees in terms of an electrical angle (at an angular interval of 60 degrees in terms of a mechanical angle).

The six stator teeth 82 are formed at equal intervals on the inner periphery of the stator retaining ring 81 and define six slots 84 among the stator teeth 82. The six stator windings 83 are accommodated in the slots 84, respectively. As shown in FIG. 3, the six stator windings 83 are connected in series. More specifically, the six stator windings 83 are connected in series such that the winding direction of the three U-phase stator windings 83U1, 83U2, 83U3 and the winding direction of the three V-phase stator windings 83V1, 83V2, 83V3 are opposite to each other when the series circuit formed of the six stator windings 83 is viewed from a first terminal. Hence, in the case where a current is passed from the first terminal toward a second terminal of the series circuit formed of the six stator windings 83, if the direction of the current flowing through the U-phase stator windings 83U1, 83U2, 83U3 is a clockwise direction as viewed from the center of rotation of the rotor 70, the direction of the current flowing through the V-phase stator windings 83V1, 83V2, 83V3 is a counterclockwise direction as viewed from the center of rotation of the rotor 70. One end PU1 of the stator winding 83U1, which is one end of the series circuit formed of the six windings 83, and one end PV1 of the stator winding 83V1, which is the other end of the series circuit, are connected to a motor drive circuit (H-bridge circuit).

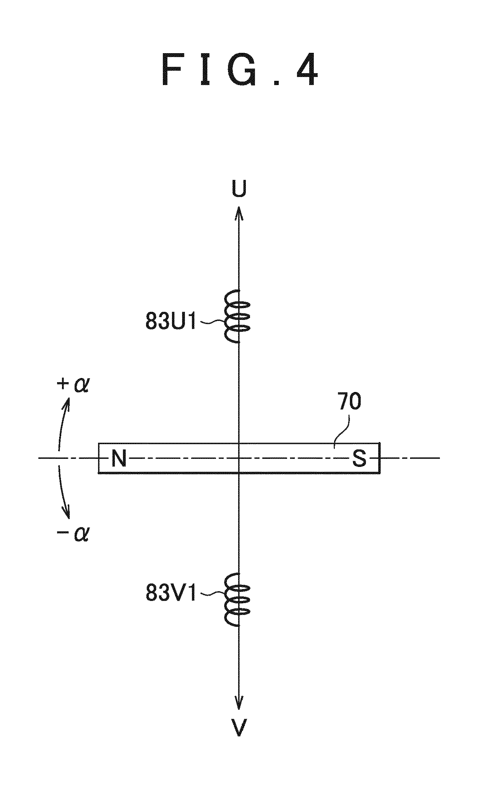

In this embodiment, the rotation angle range of the valve drive motor 15 is a range of approximately ±5 degrees in terms of the mechanical angle centered on the neutral position of the hydraulic control valve. In this embodiment, the valve drive motor 15 is the two-phase brushless motor having six poles and six slots, and therefore, the range of the rotation angle of the valve drive motor is a range of approximately ±15 degrees in terms of the electrical angle centered on the neutral position of the hydraulic control valve. FIG. 4 is a schematic diagram illustrating only one pair of the three pairs of two-phase stator windings included in the valve drive motor 15 and one pair of the three pairs of magnetic poles included in the valve drive motor 15.

More specifically, the pair composed of the U-phase first stator winding 83U1 and the V-phase first stator winding 83V1 among the three pairs of two-phase stator windings included in the valve drive motor 15 is shown. The illustration of FIG. 4 applies also to the pair composed of the U-phase second stator winding 83U2 and the V-phase second stator winding 83V2, or the pair composed of the U-phase third stator winding 83U3 and the V-phase third stator winding 83V3.

The U-phase first stator winding 83U1 and the V-phase first stator winding 83V1 are disposed at positions where the phases thereof are shifted by 180 degrees in terms of the electrical angle. As shown in FIG. 4, a UV coordinate system is defined such that a U-axis and a V-axis are taken in the directions of the U-phase first stator winding 83U1 and the V-phase first stator winding 83V1, respectively. The valve drive motor 15 and the hydraulic control valve 14 are connected such that the rotation angle position of the rotor 70, at which the U-axis and the V-axis become orthogonal to the magnetic pole axis of the rotor 70, coincides with the neutral position of the hydraulic control valve 14. Further, a stopper (not shown) that restricts a rotation angle range is provided such that the rotor 70 is rotatable only within the angle range of ±15 degrees in terms of the electrical angle centered on the rotation angle position corresponding to the neutral position.

The rotation of the rotor 70 is controlled within the foregoing rotation angle range by controlling a drive current and a voltage applied to the U-phase stator windings 83U1, 83U2, 83U3 and the V-phase stator windings 83V1, 83V2, 83V3. More specifically, the rotor 70 rotates in a predetermined first direction when the drive current is supplied from the U-phase stator side constituted by the windings 83U1, 83U2, 83U3 to the V-phase stator side constituted by the windings 83V1, 83V2, 83V3. At this time, since the U-phase stator windings 83U1, 83U2, 83U3 and the V-phase stator windings 83V1, 83V2, 83V3 are connected as shown in FIG. 3 as described above, one windings of the U-phase or V-phase stator windings generate a magnetic field that attracts the north pole of the rotor 70, while the other windings of the U-phase or V-phase stator windings generate a magnetic field that repels the north pole of the rotor 70, i.e., that attracts the south pole of the rotor 70. This causes the rotor 70 to rotate in the predetermined first direction. Meanwhile, if the drive current is supplied from the V-phase stator winding side to the U-phase stator winding side, the directions of the magnetic fields generated by the U-phase stator windings and the V-phase stator windings are reversed, and therefore, the rotor 70 rotates in a second direction that is opposite to the first direction. Thus, in the valve drive motor 15, all the stator windings 83V1, 83V2, 83V3, 83U1, 83U2, 83U3 wound on the stator contribute to the motor drive, and therefore, space utilization efficiency is improved.

FIG. 5 is a block diagram showing the electrical configuration of the ECU 40. The ECU 40 includes a microcomputer 41, a drive circuit 42 that is controlled by the microcomputer 41 and that supplies electric power to the valve drive motor 15, and a drive circuit 43 that is controlled by the microcomputer 41 and that supplies electric power to the pump drive motor 25. The drive circuit 42 for the valve drive motor 15 is an H-bridge type circuit. The drive circuit 43 for the pump drive motor 25 is an inverter circuit.

The microcomputer 41 includes a CPU and memories such as a ROM and a RAM. The microcomputer 41 functions as a plurality of functional processing units by carrying out a predetermined program. The functional processing units include a valve drive motor control unit 50 that controls the valve drive motor 15 and a pump drive motor control unit 60 that controls the pump drive motor 25.

The valve drive motor control unit 50 includes an assist torque command value setter 51, a valve opening command value setter 52, a rotation angle computing unit 53, an rotation angle difference computing unitr 54, a proportional-integral-derivative control unit 55, a motor current computing unit 56, a current difference computing unit 57, a proportional-integral control unit 58, and a pulse width modulation control unit 59. Hereinafter, the proportional-integral-derivative control will be abbreviated to the PID control, the proportional-integral control will be abbreviated to the PI control, and the pulse width modulation will be abbreviated to PWM. The assist torque command value setter 51 sets an assist torque command value TA* that is a command value of the assist torque to be generated at the power cylinder 16 on the basis of the steering torque Th detected by the torque sensor 32 and the vehicle speed V detected by the vehicle speed sensor 35.

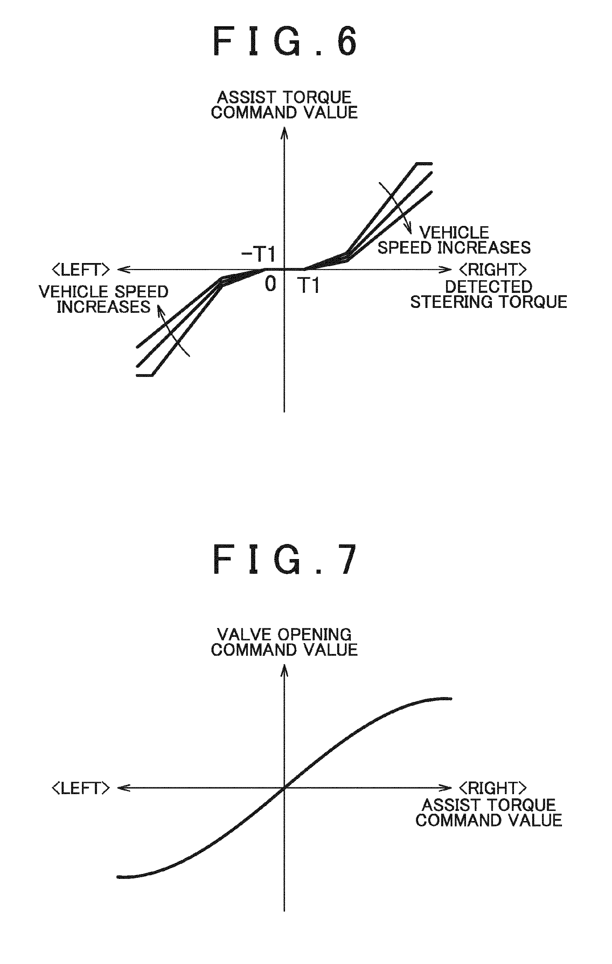

More specifically, the assist torque command value setter 51 sets the assist torque command value TA* according to a map storing the relationship between the detected steering torque and the assist torque command value at each vehicle speed. FIG. 6 is a graph showing an example in which the assist torque command value is set with respect to the detected steering torque. The detected steering torque Th takes, for example, a positive value when the detected steering torque Th is a torque for steering to the right and a negative value when the detected steering torque Th is a torque for steering to the left. Further, the assist torque command value TA* is set to a positive value when an assist torque for steering to the right is to be generated by the power cylinder 16 and set to a negative value when an assist torque for steering to the left is to be generated by the power cylinder 16.

The assist torque command value TA* takes a positive value when the detected steering torque Th is a positive value and takes a negative value when the detected steering torque Th is a negative value. If the detected steering torque Th takes a minute value in the range of -T1 to T1, the assist torque command value is set to zero. In ranges of the detected steering torque Th other than the range of -T1 to T1, the assist torque command value TA* is set such that the absolute value of the assist torque command value TA* increases as the absolute value of the detected steering torque Th increases. Further, the assist torque command value TA* is set such that the absolute value of the assist torque command value TA* decreases as the vehicle speed V detected by the vehicle speed sensor 35 increases.

The valve opening command value setter 52 sets a valve opening command value θB* that is a command value of the opening of the hydraulic control valve 14 on the basis of the assist torque command value TA* set by the assist torque command value setter 51. The valve opening command value θB* is also the command value of the rotation angle of the valve drive motor 15. In this embodiment, the rotation angle of the valve drive motor 15 when the rotor of the hydraulic control valve 14 is in the neutral position is zero degrees. When the rotation angle of the valve drive motor 15 becomes larger than zero degrees, the opening of the hydraulic control valve 14 is controlled such that the assist torque for steering to the right is generated by the power cylinder 16. Meanwhile, when the rotation angle of the valve drive motor 15 becomes smaller than zero degrees and takes a negative value, the opening of the hydraulic control valve 14 is controlled such that the assist torque for steering to the left is generated by the power cylinder 16. As the absolute value of the rotation angle of the valve drive motor 15 increases, the absolute value of the assist torque generated by the power cylinder 16 increases.

The valve opening command value setter 52 sets the valve opening command value θB* according to a map storing the relationship between the assist torque command value TA* and the valve opening command value θB*. FIG. 7 is a graph showing an example in which the valve opening command value θB* is set with respect to the assist torque command value TA*. The valve opening command value θB* takes a positive value when the assist torque command value TA* takes a positive value and takes a negative value when the assist torque command value TA* takes a negative value. The valve opening command value θB* is set such that the absolute value of the valve opening command value θB*increases as the absolute value of the assist torque command value TA* increases.

The rotation angle computing unit 53 computes the rotation angle θB of the valve drive motor 15 on the basis of an output signal of the rotation angle sensor 33. The rotation angle difference computing unit 54 computes a difference ΔθB (ΔθB = θB* - θB) between the valve opening command value θB* set by the valve opening command value setter 52 and the rotation angle θB of the valve drive motor 15 computed by the rotation angle computing unit 53. The PID control unit 55 carries out PID computation on the rotation angle difference ΔθB computed by the rotation angle difference computing unit 54. In other words, the rotation angle difference computing unit 54 and the PID control unit 55 constitute a rotation angle feedback control device that causes the rotation angle θB of the valve drive motor 15 to coincide with the valve opening command value θB*. The PID control unit 55 computes a current command value for the valve drive motor 15, by carrying out the PID computation on the rotation angle difference ΔθB.

The motor current computing unit 56 detects a motor current flowing to the valve drive motor 15 on the basis of an output signal of the current sensor 36. The current difference computing unit 57 computes the difference between the current command value determined by the PID control unit 55 and a motor current computed by the motor current computing unit 56. The PI control unit 58 carries out PI computation on the current difference computed by the current difference computing unit 57. In other words, the current difference computing unit 57 and the PI control unit 58 constitute a current feedback control device that adjusts the motor current flowing to the valve drive motor 15 to the current command value. The PI control unit 58 computes the value of a controlled voltage to be applied to the valve drive motor 15, by carrying out the PI computation on the current difference.

The PWM control unit 59 generates a PWM drive signal on the basis of the controlled voltage value computed by the PI control unit 58 and the rotation angle θB of the valve drive motor 15 computed by the rotation angle computing unit 53 and supplies the generated PWM drive signal to the drive circuit 42. The drive circuit 42 is constituted by an H-bridge circuit. Power elements constituting the H-bridge circuit are controlled according to the PWM drive signal from the PWM control unit 59, and thus, a voltage based on the controlled voltage value computed by the PI control unit 58 is applied to the valve drive motor 15.

The pump drive motor control unit 60 includes a steering angular velocity computing unit 61, a pump revolution number command value setter 62, a pump drive motor rotation angle computing unit 63, a pump drive motor revolution number computing unit 64, a revolution number difference computing unit 65, a PI control unit 66, and a PWM control unit 67. The steering angular velocity computing unit 61 computes a steering angular velocity by carrying out temporal differentiation on an output value of the steering angle sensor 31. The pump revolution number command value setter 62 sets a pump revolution number command value VP* that is a command value of the number of revolutions of the hydraulic pump 23, on the basis of the steering angular velocity computed by the steering angular velocity computing unit 61. The pump revolution number command value VP* is the command value of the number of revolutions of the pump drive motor 25 and is also the command value of a rotation speed.

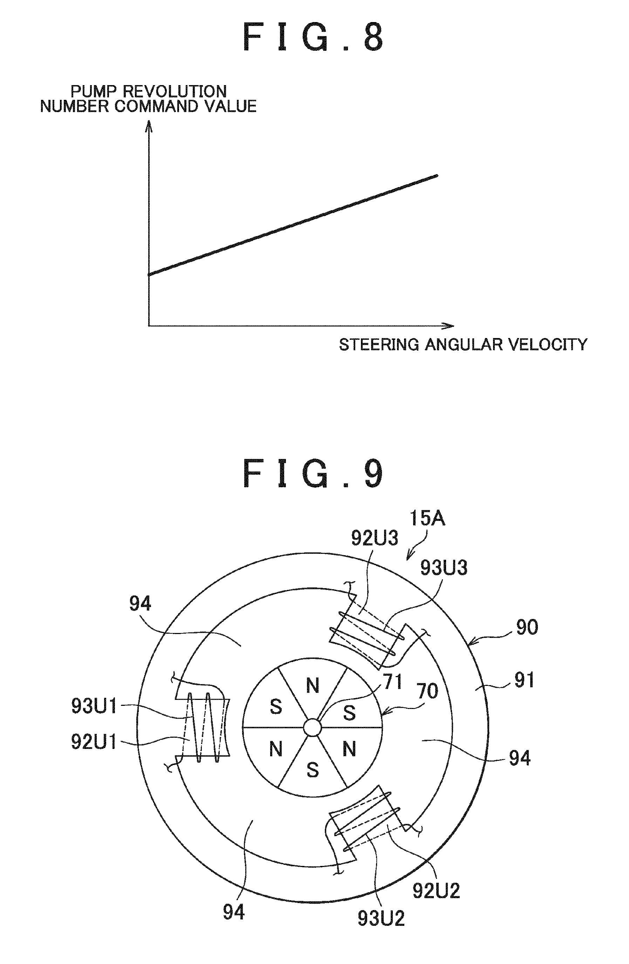

More specifically, the pump revolution number command value setter 62 sets the pump revolution number command value VP* according to a map storing the relationship between the steering angular velocity and the pump revolution number command value VP*. FIG. 8 is a graph showing an example in which the pump revolution number command value VP* is set with respect to the steering angular velocity. The pump revolution number command value VP* is set such that the pump revolution number command value VP* takes a predetermined lower limit value when the steering angular velocity is zero and monotonically increases as the steering angular velocity increases.

The rotation angle computing unit 63 computes the rotation angle θP of the pump drive motor 25 on the basis of an output signal of the rotation angle sensor 34. The revolution number computing unit 64 computes the number of revolutions, i.e., the rotation speed VP of the pump drive motor 25, on the basis of the rotation angle θP of the pump drive motor 25 computed by the rotation angle computing unit 63. The revolution number difference computing unit 65 computes a difference ΔVP (ΔVP = VP* - VP) between the pump revolution number command value VP* set by the pump revolution number command value setter 62 and the number of revolutions VP of the pump drive motor 25 computed by the revolution number computing unit 64.

The PI control unit 66 carries out the PI computation on the revolution number difference ΔVP computed by the revolution number difference computing unit 65. In other words, the revolution number difference computing unit 65 and the PI control unit 66 constitute a revolution number feedback control device that causes the number of revolutions VP of the pump drive motor 25 to coincide with the pump revolution number command value VP*. The PI control unit 66 computes the value of a controlled voltage to be applied to the pump drive motor 25 by carrying out the PI computation on the revolution number difference ΔVP.

The PWM control unit 67 generates a drive signal on the basis of the controlled voltage value computed by the PI control unit 66 and the rotation angle θP of the pump drive motor 25 computed by the rotation angle computing unit 63 and supplies the generated drive signal to the drive circuit 43. Thus, a voltage based on the controlled voltage value computed by the PI control unit 66 is applied from the drive circuit 43 to the pump drive motor 25. In this embodiment, the rotation angle range of the valve drive motor 15 is 10 degrees in terms of the mechanical angle, in other words, 30 degrees in terms of the electrical angle. The valve drive motor 15 is constituted by the two-phase brushless motor as described above. Therefore, even in the case where the valve drive motor 15 is controlled within the angle range that is the limited rotation angle range, all the stator windings 83U1, 83V1, 83U2, 83V2, 83U3, and 83V3 of the valve drive motor 15 are able to contribute to the motor drive. Hence, the space utilization efficiency of the valve drive motor 15 can be improved.

The description has been provided on one embodiment of the present invention. The present invention, however, can be implemented in another embodiment. For example, although the valve drive motor 15 is the two-phase brushless motor having six poles and six slots in the foregoing embodiment, the number of the poles and the number of the slots are not limited thereto. Preferably, however, the number of poles and the number of slots are both n that denotes an arbitrary natural number. Further, although the valve drive motor 15 is the two-phase brushless motor in the foregoing embodiment, the valve drive motor 15 may be a two-phase brushed DC motor.

Further, the valve drive motor 15 may be an electric motor having 2m poles and m slots, "m" denoting an arbitrary natural number. For example, the valve drive motor may be a brushless motor 15A having six poles and three slots, as shown in FIG. 9. The brushless motor 15A includes a rotor 70 and a stator 90 surrounding the rotor 70. The rotor 70 is supported so as to be rotatable around a rotary shaft 71. The rotor 70 has six magnetic poles, i.e., three pairs of magnetic poles.

The stator 90 includes a stator retaining ring 91, three stator teeth 92U1, 92U2, 92U3 that project inward from the stator retaining ring 91, and stator windings 93U1, 93U2, 93U3 that are wound around the stator teeth 92U1, 92U2, 92U3, respectively. The three stator teeth 92U1, 92U2, 92U3 are formed at equal intervals on the inner periphery of the stator retaining ring 91 and define three slots 94 among the stator teeth 92U1, 92U2, 92U3. The three stator windings 93U1, 93U2, 93U3 are accommodated in the slots 94, respectively. The three stator windings 93U1, 93U2, 93U3 are connected in series. More specifically, the three stator windings 93U1, 93U2, 93U3 are connected in series such that all the winding directions of the three stator windings 93U1, 93U2, 93U3 are the same when viewed from either one of the terminals of the series circuit. The drive of the brushless motor 15A is controlled by controlling the drive current supplied to the series circuit formed of the stator windings 93U1, 93U2, 93U3.

Various design modifications may be made to the present invention within the scope of the invention as indicated by the appended claims.

## Claims

1. A two-phase motor comprising:
a stator including a series circuit formed of a first-phase stator winding and a second-phase stator winding; and
a rotor that is opposed to the stator, and has a plurality of magnetic poles,
wherein the first-phase stator winding and the second-phase stator winding are disposed at an interval of 180 degrees in terms of an electrical angle, and
the two-phase motor is used in a state where a rotation angle range of the rotor is limited to below 180 degrees in terms of the electrical angle.

2. The two-phase motor according to claim 1, wherein
the first-phase stator winding and the second-phase stator winding are connected in series such that a winding direction of the first-phase stator winding and a winding direction of the second-phase stator winding are opposite to each other when viewed from either one of terminals of the series circuit.

3. The two-phase motor according to claim 1 or 2, wherein
the rotor has 2n magnetic poles and the stator has 2n stator windings, the n denoting an arbitrary natural number.

4. A hydraulic power steering system comprising:
the two-phase motor according to any one of claims 1 to 3 used as a valve drive motor that controls an opening of a hydraulic control valve; and
a motor control unit that controls the valve drive motor,
wherein in the power steering system, a steering force is assisted by supplying a hydraulic fluid from a hydraulic pump to a power cylinder connected to a vehicle steering mechanism, through the hydraulic control valve that is not mechanically connected to a steering member.

5. The hydraulic power steering system according to claim 4, wherein
the motor control unit includes:
an opening command value setter that sets an opening command value that is a command value of the opening of the hydraulic control valve; and
a unit that controls the valve drive motor according to the opening command value set by the opening command value setter.
